# EUROPEAN PATENT APPLICATION

(11) **EP 4 573 861 A1**
(43) Date of publication of application: **25.06.2025**
(21) Application number: 23220070.9
(22) Date of filing: 22.12.2023
(51) Int. Cl.: A01B 45/02

(54) **MOBILE DEVICE FOR WORKING SPORTS SURFACES**

(71) Applicant: Redexim B.V., 3709 JA Zeist (NL)
(72) Inventor: de Bree, Cornelis Herman G., 3709 JA Zeist (NL)
(74) Representative: dompatent von Kreisler Selting Werner - Partnerschaft von Patent- und Rechtsanwälten mbB

(57) **Abstract**

In a mobile device (1) for the treatment of sports surfaces (2) lawns, with
a machine frame (4),
at least one support element (6) mounted on the machine frame (4), which is preferably a roller element, and in the working position rests on the ground and supports the machine frame (4),
at least one working device (8) for working the ground, which is arranged behind the supporting element (6) in the working direction (A),
it can be provided that the working device (8) has at least a first holding beam (10) which runs transversely with respect to the direction of travel (A) and on which a plurality of tine devices (12) are arranged, the respective tine device (12) having at least a first tine section (14) which projects from the holding beam (10) and having a second tine section (16) which projects at an angle α of between 45°degrees and 135°degrees from the first tine section (14) and points in the direction of the ground to be worked.

## Description

The invention relates to a device according to claim 1 and a method according to claim 14 for the treatment of sports surfaces, in particular lawns.

The sports areas can be, in particular, sports fields such as soccer, rugby, field hockey or tennis courts.

The sports fields can be lawns or also so-called hybrid lawns, which have at least partially artificial grass fibers. Such artificial grass fibers are usually inserted into the grass surface to a depth of about 18-20 cm and protrude about 20-25 mm above the ground. The other known system is a carpet based lawn system. An artificial carpet system consists of an artificial carpet filled with sand and grass seeds are sown. This system is approx 50mm thick (from backing to top of the artificial grass fibre). With such hybrid lawns or carpet based systems, there is an increasing problem of disease or other infestation. In addition, in the case of a hybrid lawn, the natural grass must also be regularly maintained. Otherwise, the natural grass grows over the synthetic fibers and the net or support structure formed by the artificial fibers. This can lead to a more unstable grass layer. Thus, there is an increasing need to improve the maintenance of lawn.

Therefore, especially such hybrid lawns must be regularly cleared of weeds or felt and aerated.

Devices for working sports fields are known which have at least one working device, for example a roller, to which tools are attached which loosen the soil. These tools are often knives that are arranged on the roller shell and cut into the ground by rotating the roller, thereby loosening it.

However, there is an increasing need, especially for sports surfaces, particularly those consisting of hybrid turf, to improve the treatment of the soil and, in particular, to prevent damage to the artificial grass fibers.

According to the present invention, the working device has at least a first holding beam which extends transversely to the direction of travel and on which a plurality of tine devices are arranged, the respective tine device having at least a first tine section which projects from the holding beam in a first direction and having a second tine section which projects at an angle of between 45° and 135° from the first tine section and points in the direction of the ground to be worked.

By means of the present invention it is possible, in particular due to the special arrangement of the tine device, that the soil is only slightly loosened and, especially in the case of hybrid lawns, the artificial fibers are not damaged.

By having a first tine section and a second tine section, the tine device can be assured that the tine device does not penetrate deeper into the soil surface than the second section.

Furthermore, the arrangement of the second tine section with respect to the first tine section ensures that the soil is not damaged too much.

The present invention is therefore specifically suitable for the maintenance of hybrid turf, as it works more gently / flat and does not hit the base of this type of system.

The second tine section can protrude an angle between 60° and 120°, in particular 90° from the first tine section.

The first tine section may have a length that is at least twice the length of the second tine section.

The length of the second tine section can be a maximum of 50 mm, preferably 40 mm, in particular a maximum of 30 mm.

The tine device can have at least one leaf spring in the first tine section. This has the advantage that the tine device penetrates the ground with a predefined force. If the tine device hits a hard object in the ground, for example, it will not be damaged because the tine devices can swerve.

The first tine section can be made of a tine element that can have different crosssections. Preferably, the cross-section can be round or square or hexagon or polygonal.

The first tine section can have an angle of 5° to 45° in relation to the soil surface to be worked.

This additionally ensures that there is no damage to the sports field.

The holding beam transverse to the direction of travel can be moved back and forth, preferably oscillating back and forth. This ensures that the entire surface is processed.

The working device can have at least one second holding beam which extends transversely to the direction of travel and on which a plurality of tine devices are likewise arranged, the respective tine device having at least one first tine section which projects from the holding beam in a first direction and having a second tine section which projects at an angle of between 45° and 135° from the first tine section and points in the direction of the ground to be worked.

The first and second holding beams can be arranged relative to one another in such a way that the respective tine devices arranged on these holding beams are arranged one behind the other in the direction of travel and offset relative to one another by one offset distance in each case in the transverse direction transverse to the direction of travel.

The first and second holding beams can be moved back and forth synchronously with each other.

The respective tine device can be constructed in such a way that at least the second area is interchangeable.

In the at least one first and/or the at least one second holding beam, at least 20 tine devices, preferably at least 25, in particular 30 tine devices each, can be arranged.

The maximum deflection with which the first and/or second holding beam can be moved back and forth can be greater than the respective offset distance between the tine device of the first holding beam to the tine device of the second holding beam.

The at least one holding beam can be moved back and forth in an oscillating manner, and the respective second tine section can penetrate the soil and loosen the soil.

The second tine section can penetrate the soil by a maximum of 50 mm, preferably 40 mm, in particular a maximum of 30 mm.

In the following, with reference to the drawings, embodiments of the present invention are explained in more detail.
- Fig. 1: shows a device according to the invention,
- Fig. 2: shows a side view of the device according to the invention,
- Fig. 3: shows a section of the device of Figs. 1 and 2,
- Fig. 4: shows a processing image on the soil surface,
- Fig. 5: shows a tine device in the side view
- Fig. 6: shows another more detailed section,
- Fig. 7: shows an alternative embodiment.

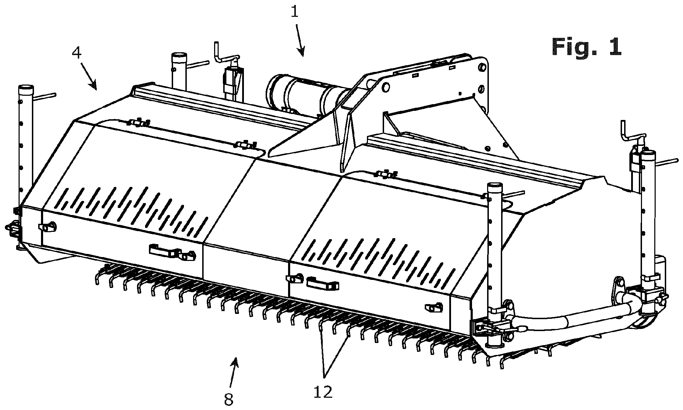

In Fig. 1, a mobile device 1 for working sports surfaces 2 is shown. The sports surfaces may preferably comprise grass, at least in part. However, the sports surfaces may also have artificial grass fibers. Sports surfaces that have both natural and artificial grass fibers are called hybrid surfaces. These can also be processed with the mobile device 1 according to the invention.

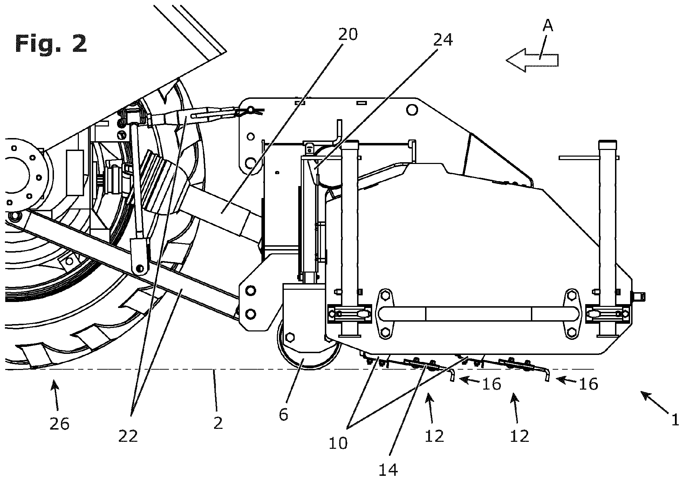

The device 1 has a machine frame 4. A support element 6 is provided on the machine frame 4. In the embodiment shown, the support element 6 is a roller element. In the working position, which is shown in more detail in Figure 2, the support element 6 rests on the ground surface and supports the machine frame 4. The support element 6 can further be adjusted in height by the adjustment device 24. By adjusting the height of the support element 6 relative to the ground surface 2, the device 1 can be adjusted in height so that it can be adjusted how deep the tine device 12 should penetrate the ground.

Furthermore, at least one working device 8 is provided for working the floor. The working device 8 is preferably arranged behind the support element 6 in the working direction A.

As can be seen in Figs. 1 and 2, the working device 8 has at least a first holding beam 10 extending transversely to the direction of travel A, on which several tine devices 12 are arranged. The respective tine device 12 may have at least a first tine section 14 projecting from the holding beam 10 in a first direction F. Furthermore, the tine device 12 has a second tine section 16 which projects from the first tine section and points in the direction of the soil to be processed.

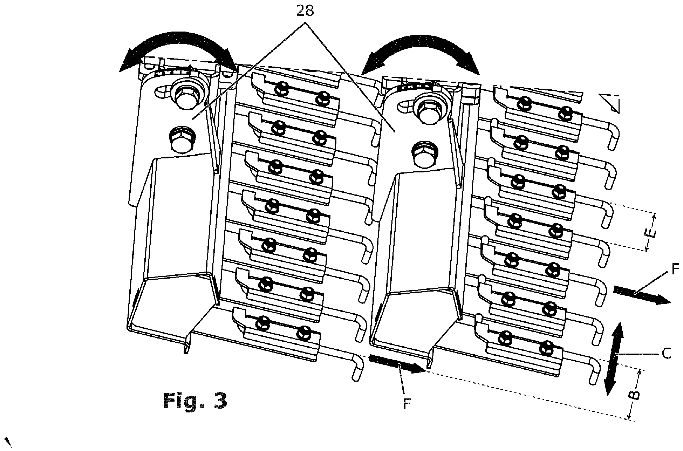

Fig. 2 clearly shows that the present device 1 is towed by a towing vehicle 26. The towing vehicle and the device 1 are connected to each other via connecting elements 22. Furthermore, a cardan shaft 20 is also provided, with which the working device 8 is moved. The holding beams can be moved relative to the machine frame. This is described in more detail with reference to Fig. 3.

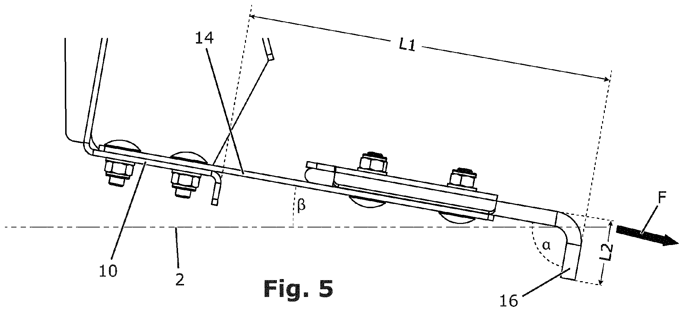

The exact design and arrangement of the first and second tine sections 14, 16 relative to each other will be explained in more detail in connection with Fig. 5.

Fig. 3 shows a section of Fig. 1. In the section, the at least one holding beam 10 can be seen in more detail. In the present

In an embodiment example, not only a first holding beam 10 but also a second holding beam 10 is provided, on which a plurality of tine devices 12 are also arranged, the respective tine device 12 having at least one first tine section 14 and at least one second tine section 16.

The first and/or second holding beam 10 can each be moved back and forth in a direction C that runs transversely to the direction of travel A, in particular moved back and forth in an oscillating manner. The reciprocating movement of the holding beams 10 also reciprocates the tine device 12. The reciprocating movement of the tine device 12 ensures that the entire ground surface over which the device 1 is moved is worked and thus loosened up.

As shown in Fig. 2, the holding beams 10 are driven by the traction vehicle 26 by means of a cardan shaft 20. Alternatively, an independent drive device could also be provided in the device 1.

According to the present invention, at least one holding beam 10 is provided. However, in a preferred embodiment as shown in the figures, two holding beams 10 may be provided, as already described. Insofar as two holding beams 10 are provided, these are preferably arranged in such a way that the tine devices 12 are arranged one behind the other in the direction of travel A and offset relative to one another transversely to the direction of travel by an offset distance B in each case. The first and second holding beams 10 can be moved back and forth synchronously with each other.

Furthermore, it can also be seen in Fig. 3 that an adjustment device 28 is provided by means of which the angle of the holding beams 10 to the machine frame 4 can be adjusted. In this way, the arrangement of the tine device 12 to the ground surface 2 and in particular the angular position of the tine device 12 to the ground can be adjusted. In the illustrated embodiment example, the adjustment device 28 comprises bolts. The bolts can be loosened and the holding beam 10 can be pivoted with respect to the machine frame. Afterwards, the bolts can be tightened again and the holding beams 4 then have a defined arrangement with respect to the machine frame 4.

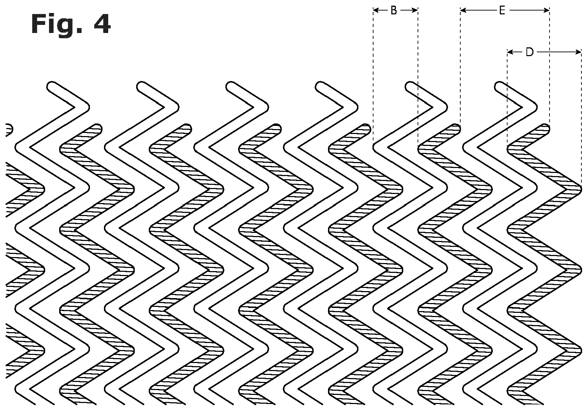

Fig. 4 shows the pattern that results from the processed floor. In the case of a device with two holding beams arranged one behind the other (as shown in Fig. 3), the processed floor looks as in Fig. 4. The two holding beams 10 are moved synchronously with each other. Therefore, the offset distance B can be seen in the pattern on the floor. Furthermore, the respective tines are moved back and forth by the maximum deflection D by means of the holding beams 10. The respective side-by-side tine devices 12 of both the first and second holding beams 10 have a distance E between them. With a uniform forward movement of the device 1, the pattern shown in Fig. 4 is then formed on the ground, in which the tine devices 12 loosen the ground accordingly. The pattern can be adjusted accordingly by adjusting the arrangement of the tine devices relative to each other as well as the speed at which tine device 12 is moved back and forth, Also, the speed at which device 1 is moved can be adjusted.

In the present embodiment, the oscillating back and forth motion is preferably coupled to the speed of the device 1.

The faster the device 1 is moved, the faster the oscillating back and forth movement can also be performed, so that sufficient loosening of the soil is possible even at faster speeds.

Preferably, however, the device is moved at a speed between 1 and 5 km/h, especially between 1 and 3 km/h.

Fig. 5 shows a side view of a tine device 12. It can be seen that the second tine section 16 protrudes from the first tine section at an angle α between 45° and 135° and points in the direction of the soil being worked.

The first tine section 14 has a length L₁ that is preferably at least twice as long as the length L₂ of the second tine section 16. The second tine section 16 can particularly preferably project from the first tine section 14 at an angle α of between 60° and 120°, in particular 90°. The first tine section 14 can have an angle β of 5 to 50°, in particular 10° to 45°, relative to the ground surface 2 to be worked.

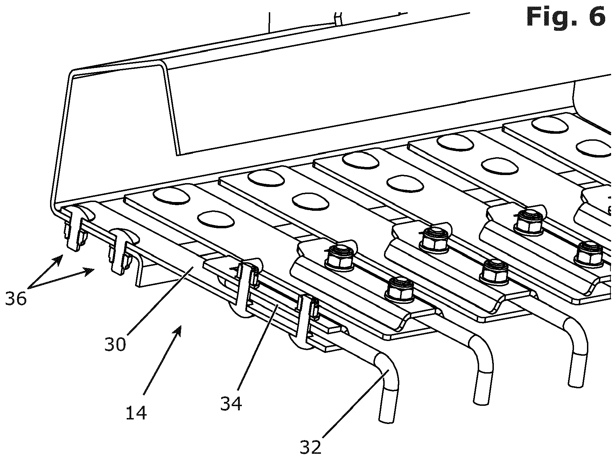

Fig. 6 shows a section of a holding beam 10 with tine device 12. In this section, the tine devices can be seen in more detail. It can be seen that the tine device 12 consists of a first element 30 and a second element 32, which are connected to each other via a fastening device 34.

The first prong section 14 comprises a portion of the first element 30, a portion of the second element 32, and the connecting device 34. In the present embodiment, the first element 30 is a leaf spring to which the connecting device 34 is attached, into which the element 32 is inserted. The connecting device 34 allows the length of the first tine section 14 to be adjusted. The first element 30 is connected to the holding beam 12 by bolt means 36. The second element 32 can be easily replaced when worn. The use of a leaf spring in the first tine section 14 ensures that the tine device is spring loaded. The use of a leaf spring in the first tine section 14 can enable a defined penetration pressure of the tine device 12 into the ground. Depending on the choice of the leaf spring, it can be ensured that no excessive pressure is exerted on the soil, which prevents damage to the artificial grass fibers, especially in hybrid surfaces. The leaf spring has further the advantage that the tine has a stiffness in the oscillating direction and elasticity in the direction of the pressure applied to the soil. Due to this the tine section structure can be made more compact.

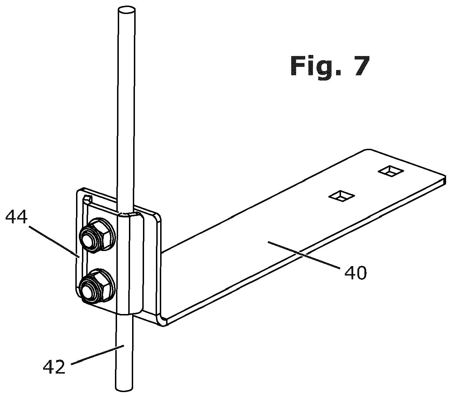

Figure 7 shows another embodiment in which the first tine section 14 is formed by an element 40, which can also be a leaf spring. The second tine section 16 is formed by a second element 42, which is connected to the first tine section 40 via a connecting device 44. The length of the second tine section 16 can be adjusted by adjusting the second element 42 with respect to the first element 40. After disconnecting the connecting means 44, the second element 42 can be adjusted. This makes it possible to readjust the second element 42 as it wears, and to ensure that the portion of the second element 42 forming the second tine section 16 is always of the same length.

## Claims

1. Mobile device (1) for the treatment of sports surfaces (2), in particular lawns, with
a machine frame (4),
at least one support element (6) mounted on the machine frame (4), which is preferably a roller element, and in the working position rests on the ground and supports the machine frame (4),
at least one working device (8) for working the ground, which is arranged behind the supporting element (6) in the working direction (A),
**characterized in that**
the working device (8) has at least a first holding beam (10) which runs transversely with respect to the direction of travel (A) and on which a plurality of tine devices (12) are arranged, the respective tine device (12) having at least a first tine section (14) which projects from the holding beam (10) and having a second tine section (16) which projects at an angle α of between 45°degrees and 135°degrees from the first tine section (14) and points in the direction of the ground to be worked.

2. Device according to claim 1, **characterized in that** second tine section (16) protrudes from the first tine section (14) at an angle α between 60°degrees and 120°degrees, in particular 90°degrees.

3. A device according to claim 1 or 2, **characterized in that** the first tine section (14) has a length (L1) that is at least twice as long as the length (L2) of the second tine section (16).

4. Device according to any one of claims 1 to 3, **characterized in that** the length (L2) of the second tine section (16) is at most 50 mm, preferably 40 mm, in particular at most 30 mm.

5. Device (1) according to one of claims 1 to 4, **characterized in that** the tine device (12) has at least one leaf spring in the first tine section (14).

6. Device (1) according to one of claims 1 to 5, **characterized in that** the first tine section (14) has an angle (β) of 5 to 50°degrees, in particular 10 to 45°degrees, with respect to the ground surface (2) to be worked.

7. Device according to one of the claims 1 to 6, **characterized in that** the holding beam (10) can be moved back and forth transversely to the direction of travel, preferably oscillating back and forth.

8. Device (1) according to one of claims 1 to 7, **characterized in that** the working device (8) has at least a second holding beam (10) extending transversely to the direction of travel, on which holding beam (10) a plurality of tine devices (12) are likewise arranged, wherein the respective tine devices (12) have at least a first tine section (14) which projects from the holding beam in a first direction (F) and has a second tine section (16) which projects from the first tine section (14) at an angle (α) between 45° and 135° and points in the direction of the ground (2) to be worked.

9. Device according to claim 8, **characterized in that** the first and the second holding beams (10) are arranged relative to one another in such a way that the respective tine devices (12) arranged on these holding beams (10) are arranged one behind the other in the direction of travel (A) and offset relative to one another in a direction (C) transverse to the direction of travel by a respective offset distance (B).

10. A device according to claim 8 or 9, **characterized in that** the first and the second holding beams (10) are movable back and forth synchronously with each other.

11. Apparatus according to any one of claims 1 to 10, **characterized in that** the respective tine device (12) is constructed in such a way that at least the second tine section (16) is interchangeable.

12. Device according to one of claims 1 to 11, **characterized in that** at least 20 tine devices, preferably at least 25, in particular 30 tine devices (12) in each case, are arranged on the at least one first and/or the at least one second holding beam (10).

13. Device according to any one of claims 1 to 12, **characterized in that** the maximum deflection (D) with which the first and/or second holding beam (10) can be moved back and forth is greater than the respective offset distance (B) between the tine devices of the first holding beam to the tine devices in the second holding beam.

14. A method for cultivating lawns, comprising a device according to any one of claims 1 to 13, **characterized in that** the at least one holding beam (10) is oscillating reciprocated and the respective second tine section (16) penetrates into the soil and loosens the soil (2).

15. The method according to claim 13, **characterized in that** the second tine section (16) penetrates the ground by a maximum of 50 mm, preferably 40 mm, in particular by a maximum of 30 mm.
